# EUROPÄISCHE PATENTANMELDUNG

(11) **EP 0 952 406 A2**
(43) Veröffentlichungstag der Anmeldung: **27.10.1999**
(21) Anmeldenummer: 99107162.2
(22) Anmeldetag: 13.04.1999
(51) Int. Cl.: F24D 10/00, F24D 12/02

(54) **Blockheizkraftwerk**

(30) Priorität: 14.04.1998 DE 19816415
(71) Anmelder: Mandel, Rainer, 98590 Zillbach (DE)
(72) Erfinder: Mandel, Rainer, 98590 Zillbach (DE)
(74) Vertreter: Engel, Christoph Klaus

(57) **Zusammenfassung**

Die Erfindung betrifft ein Blockheizkraftwerk mit einem Stromerzeugungsaggregat, welches einen Verbrennungsmotor (1) und einen von diesem angetrieben Generator (2) umfaßt, und mit einem Heizkessel (5). Der Heizkessel besitzt einen Brenner (9), dessen Heizflamme in einen Brennraum (8) gerichtet ist, und einen Wärmetauscher (10, 14). Die vom Verbrennungsmotor (1) emittierten Abgase werden unmittelbar in den Brennraum (8) in einem spitzen Winkel zur Längserstreckung der Heizflamme des Brenners eingeleitet, so daß der Hauptabgasstrom die Heizflamme des Brenners (9) etwa an deren Spitze kreuzt. Als Heizkessel wird ein Brennwertheizkessel (5) verwendet, in welchem die vom Verbrennungsmotor (1) emittierten Abgase und/oder die vom Brenner (9) emittierten Rauchgase vor Abgabe an die Umwelt über den Wärmetauscher (10, 14) bis unter ihren Taupunkt abkühlbar sind. Vorzugsweise werden Brenner und Verbrennungsmotor mit einem flüssigen Brennstoff betrieben. Die Erfindung ermöglicht die Einsparung eines separaten Wärmetauschers für die Nutzung der vom Verbrennungsmotor erzeugten, in den Abgasen gespeicherte Abwärme.

## Beschreibung

Die vorliegende Erfindung betrifft ein Blockheizkraftwerk mit einem Stromerzeugungsaggregat, welches einen Verbrennungsmotor, einen von diesem angetriebenen Generator und einen Heizkessel mit einem Brenner und einem Wärmetauscher umfaßt.

Bei sogenannten Blockheizkraftwerken handelt es sich um Kraft-Wärme-Kopplungs-Anlagen, die für Verbraucher sowohl elektrische Energie als auch Wärmeenergie zur Verfügung stellen. Blockheizkraftwerke werden zumeist in unmittelbarer Nahe des Verbrauchers eingesetzt und sind aufgrund ihres Wirkungsprinzips energiesparende und damit umweltschonende Energieversorgungssysteme. Kraft-Wärme-Kopplungs-Anlagen werden vorzugsweise dort eingesetzt, wo sowohl ein relativ hoher Bedarf an Elektroenergie als auch ein relativ gleichbleibender Bedarf an Wärmeenergie besteht. Prinzipiell besitzen Blockheizkraftwerke eine Antriebsmaschine, zumeist einen Verbrennungsmotor, die einen Generator antreibt, von welchem die benötigte elektrische Energie bereitgestellt wird. Die bei diesem Prozeß an der Antriebsmaschine anfallende Abwärme wird bei Blockheizkraftwerken als Nutzwärme an die angeschlossenen Verbraucher geliefert. In den meisten Fällen sind Blockheizkraftwerke so ausgelegt, daß nicht der gesamte Wärmebedarf zu jedem Zeitpunkt durch die Abwärme der Antriebsmaschine abgedeckt werden kann, so daß eine zusätzliche Wärmeerzeugungsquelle, zumeist ein herkömmlicher Heizkessel, bereitgestellt werden muß.

Aus der Deutschen Patentanmeldung DE 195 04 205 ist ein Blockheizkraftwerk bekannt, welches mehrere Wärmeerzeuger aufweist, die jeweils aus einem Stromerzeugungsmodul und einem sogenannten Spitzenlastkessel bestehen. Die größte Zahl der bekannten Blockheizkraftwerke und nahezu alle in der Praxis eingesetzten Kraft-Wärme-Kopplungs-Anlagen weist diesen prinzipiellen Aufbau auf, wobei die von dem Stromerzeugungsmodul gelieferte Abwärme über einen eigens für diesen Zweck vorgesehenen Wärmetauscher einem Heizkreislauf zugeführt wird. Ebenso ist in nahezu allen bekannten praktischen Ausführungsformen derartiger Anlagen ein Spitzenlastkessel vorgesehen, der ohne unmittelbare Kopplung an das Stromerzeugungsmodul betrieben werden kann. Durch die weitgehende Trennung zwischen Spitzenlastheizkessel und Stromerzeugungsmodul resultiert ein kostenaufwendiger Gesamtaufbau des Blockheizkraftwerkes, wobei die gemeinsame Versorgung des Verbraucherheizkreislaufes auch über den zusätzlichen Wärmetauscher erfolgt. Dieser Aufbau bedingt außerdem zusätzliche Wärmeverluste und damit einen nicht optimalen Wirkungsgrad des Blockheizkraftwerkes.

Aus der Deutschen Patentanmeldung DE 40 16 238 ist eine Vorrichtung zur Erzeugung elektrischer und Heizenergie bekannt. Bei dieser Vorrichtung wird ein Brennwertheizkessel zur Erzeugung der Heizenergie verwendet und außerdem wird ein Stirling-Motor im Inneren des Heizkessels angeordnet, welcher einen Generator antreibt. Der Einsatz von Brennwertheizkesseln wird seit einiger Zeit im Stand der Technik bevorzugt, da mit derartigen Heizkesseln bessere Wirkungsgrade erzielbar sind. Dies beruht darauf, daß dem Rauchgas die latente Wärme entzogen wird, in dem das Rauchgas unter den Taupunkt abgekühlt wird. Das allgemeine Wirkprinzip eines Brennwertheizkessels ist im Stand der Technik bekannt und wird daher an dieser Stelle nicht detailliert beschrieben. Der Nachteil des in der DE 40 16 238 gezeigten Gegenstands besteht in der Anwendung des Stirling-Motors, da solche Motoren in der Praxis kaum verfügbar sind und die erforderliche Technologie zur Herstellung und zum Betrieb der Stirling-Motoren nicht ausgereift ist.

Schließlich ist in der DE 43 32 359 A1 ein Einströmverfahren für Blockheizkraftwerke beschrieben, bei welchem das Kraftwerks-Abgas über mindestens eine um das Brennerrohr herum angeordnete Einlaßöffnung in die Brennkammer einströmt. Dabei wird das Abgas parallel zur Brennerflamme eingeleitet, so daß der Abgasstrom einen ringförmigen Mantel um das Brennergas bildet. Aus der parallelen Abgaseinleitung ergibt sich aber auch ein wesentlicher Nachteil. Es wird nämlich ein separates Anschlußstück benötigt, welches zwischen dem Brennerflansch und dem Kesselgehäuse eingesetzt werden muß. Ein anderer Nachteil besteht darin, daß sogenannte Blaubrenner bzw. Rezirkulationsbrenner, die einen hohen Wirkungsgrad bei der Verbrennung gewährleisten, nicht verwendbar sind, da es zu einer Ansaugung der Motor-Abgase kommen würde, was aufgrund der deutlich anderen Gaszusammensetzung zu einem Verlöschen der Brennerflamme führen würde.

Eine Aufgabe der vorliegenden Erfindung besteht somit darin, ein Blockheizkraftwerk zur Verfügung zu stellen, mit welchem die Nachteile des Standes der Technik vermieden werden. Insbesondere besteht die Aufgabe, den Aufbau eines Blockheizkraftwerkes zu vereinfachen und die erforderlichen Komponenten auf ein Mindestmaß zu reduzieren. Eine weitere Aufgabe der vorliegenden Erfindung ist es, den Wirkungsgrad einer derartigen Kraft-Wärme-Kopplungs-Anlage weiter zu erhöhen und den Einsatz von Rezirkulationsbrennern zu ermöglichen.

Diese und weitere Aufgaben werden durch das erfindungsgemäße Blockheizkraftwerk gelöst, welches in Anspruch 1 angegeben ist.

Ein derartiges Blockheizkraftwerk bietet den Vorteil, das der hohe wärmetechnische Wirkungsgrad eines Brennwertheizkessels mit den Möglichkeiten einer Kraft-Wärme-Kopplungs-Anlage kombiniert ist. Ein wesentlicher Vorteil dieses erfindungsgemäßen Blockheizkraftwerkes besteht außerdem darin, daß die in den vom Verbrennungsmotor emittierten Abgasen enthaltene Wärmeenergie unmittelbar in den Wärmekreislauf des Brennwertheizkessels eingekoppelt wird. Daher ist ein separater Wärmetauscher für das Stromerzeugungsaggregat nicht erforderlich. Dies bietet den technologischen Vorteil, daß das Blockheizkraftwerk mit einem geringeren Raumbedarf aufgebaut werden kann. Außerdem verringert sich der notwendige Materialeinsatz deutlich, wodurch die Gesamtkosten sinken. Durch Einsparung des separaten Wärmetauschers, der bei Blockheizkraftwerken nach dem Stand der Technik vorgesehen ist, entfallen auch die sonst üblichen Steuerungs- und Mischelemente, die bisher den Wärmekreislauf des Stromaggregats und den Wärmekreislauf des Spitzenlastkessels zusammengeführt haben. Die beiden Module des erfindungsgemäßen Blockheizkraftwerkes können auch unabhängig voneinander betrieben werden. Um den Abgasen des Verbrennungsmotors die Wärmeenergie zu entziehen, ist ein Betrieb des Brennwertheizkessels nicht erforderlich. Andererseits kann der Brennwertheizkessel zur Wärmeversorgung betrieben werden, auch wenn keine elektrische Energie benötigt wird und daher das Stromerzeugungsaggregat außer Betrieb ist. Letztlich reduziert sich auch der Steuer- und Regelungsaufwand, da die am Brennwertheizkessel vorgesehenen Sensoren auch bei der Nutzung der vom Verbrennungsmotor gelieferten Abwärme die nötigen Informationen liefern.

Die erfindungsgemäße Anordnung stellt sicher, daß die Abgase des Verbrennungsmotors in der Nähe der Heizflamme in den Brennraum eingeleitet werden, wobei diese Einleitung so erfolgt, daß der Hauptteil des Abgasstroms die Heizflamme des Brenners nicht in ihrem Kern trifft. Diese Art der Einleitung der Abgase verhindert, daß die Brennerflamme durch die sauerstoffarmen Abgase des Verbrennungsmotors gelöscht wird. Dadurch ist der parallele Betrieb von Brennwertheizkessel und Stromerzeugungsaggregat möglich. Dabei kommt es insbesondere darauf an, den Hauptabgasstrom in einem spitzen Winkel zur Längserstreckung der Heizflamme in den Brennraum einzuleiten, wobei sich Heizflamme und Abgasstrom etwa im Bereich der Spitze des Flammenkegels kreuzen.

Es ist besonders Zweckmäßig, wenn bei dem erfindungsgemäßen Blockheizkraftwerk der Brennraum etwa das obere Drittel des Heizkessels einnimmt, wobei die Abgase des Verbrennungsmotors in dieses oberere Drittel eingeleitet werden; wenn weiterhin ein Primärwärmetauscher, der Teil des Wärmetauschers ist, etwa im mittleren Drittel des Heizkessels angeordnet ist und ein Sekundärwärmetauscher, der ebenfalls Teil des Wärmetauschers ist, etwa im unteren Drittel des Heizkessels angeordnet ist; und wenn darüber hinaus die Abführung der Abgase bzw. der Rauchgase aus dem Heizkessel in dessen unterem Bereich erfolgt, wobei ein Abgasgebläse eingesetzt wird. Dieser Aufbau gewährleistet eine optimale Nutzung der zur Verfügung stehenden Wärmeenergie. Über den Primärwärmetauscher wird dem Heizkreislauf der Hauptteil der erzeugten Wärme zugeführt. Der Sekundärwärmetauscher ermöglicht die weitere Abkühlung der Abgase des Verbrennungsmotors bzw. der Rauchgase unter deren Taupunkt, so daß auch die latente Wärme einer Nutzung zugeführt werden kann.

Eine besonders vorteilhafte Ausführungsform ist dadurch gekennzeichnet, daß die Abgase des Verbrennungsmotors beim Betrieb des Brenners im wesentlichen im Brennraum des Heizkessels einer Nachverbrennung unterzogen werden. Diese Nachverbrennung wird durch die oben beschriebene Einleitung der Abgase in der Nähe der Heizflamme erzielt, da in diesem Bereich die für die Nachverbrennung erforderlichen Temperaturen vorherrschen. Dadurch kann den Abgasen nicht nur die latente Wärme entzogen werden, sondern außerdem die in den Rußpartikeln des Abgases enthaltene Energie in nutzbare Wärmeenergie umgewandelt werden. Außerdem hat die Nachverbrennung den wünschenswerten Effekt, daß die in den Abgasen enthaltenen Schadstoffe reduziert werden, so daß eine geringere Umweltbelastung ermöglicht wird.

Es ist weiterhin besonders zu bevorzugen, wenn der Brenner des Blockheizkraftwerkes mit einem flüssigen Brennstoff betrieben wird. Dabei kommt sowohl Erdöl als auch das sogenannte Biodiesel, also ein pflanzliches Öl, als Brennstoff in Frage. Natürlich kann das Blockheizkraftwerk auch so ausgelegt werden, daß der Heizkessel sowohl mit flüssigen als auch mit gasförmigen Brennstoffen betrieben werden kann, beispielsweise durch Austausch der verwendeten Brenners. Ebenso ist es möglich einen Verbrennungsmotor einzusetzen, der mit verschiedenen Brennstoffen gespeist werden kann. Beispielsweise kann es beim Einsatz eines erfindungsgemäßen Blockheizkraftwerkes in einem landwirtschaftlichen Betrieb vorteilhaft sein, sowohl den Brenner als auch den Verbrennungsmotor mit einem Biogas zu betreiben.

Bei einer abgewandelten Ausführungsform wird die vom Verbrennungsmotor unmittelbar an die Umgebung abgegebene Wärme ebenfalls einer Nutzung zugeführt, wobei vorzugsweise eine Erwärmung der dem Brenner zugeführten Verbrennungsluft durchgeführt wird. Dies kann beispielsweise durch Anordnung des Verbrennungsmotors in einem wärmeisolierenden Gehäuse geschehen, durch welches die dem Brenner zugeführte Verbrennungsluft geführt wird.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnungen. Es zeigen:
- Fig. 1: eine prinzipielle Darstellung eines erfindungsgemäßen Blockheizkraftwerkes;
- Fig. 2: eine Detaildarstellung einer Brennkammer innerhalb eines Brennwertheizkessels.

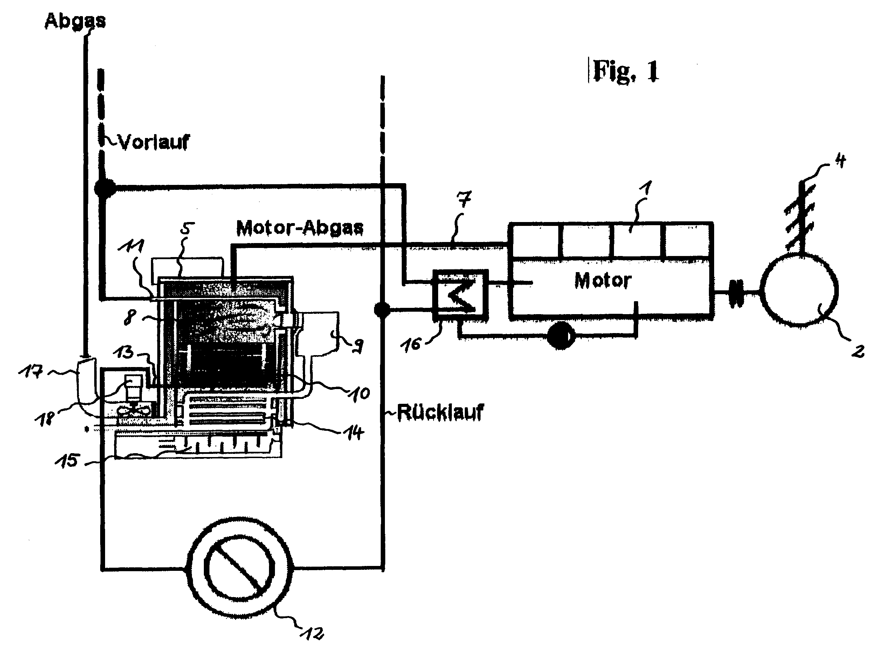

Fig. 1 zeigt in einer prinzipiellen Darstellung die erfindungsgemäße Anordnung eines Blockheizkraftwerkes, das Blockheizkraftwerk umfaßt ein Aggregat zur Erzeugung von elektrischer Energie, welches im wesentlichen aus einem Verbrennungsmotor 1 und einem Generator 2 besteht. Der Verbrennungsmotor 1 und der Generator 2 sind beispielsweise über eine Kurbelwelle 3 miteinander gekoppelt. Der Generator 2 gibt die erzeugte elektrische Energie über einen Stromversorgungsanschluß 4 an die angeschlossenen Verbraucher ab. Der Verbrennungsmotor 1 wird vorzgsweise mit einem flüssigen Brennstoff, z.B. Dieselöl, oder aber auch mit Erdgas oder einem geeigneten Biobrennstoff betrieben.

Weiterhin umfaßt das Blockheizkraftwerk einen Heizkessel, nämlich einen Brennwertheizkessel 5. Der Heizkessel 5 ist in erfindungsgemäßer Weise so ausgestaltet, daß ein Abgaseinleitungsanschluß 6 vorgesehen ist, der mit einer Abgasleitung 7 verbunden ist, in welcher die beim Betrieb des Verbrennungsmotors 1 entstehenden Motorabgase zum Brennwertheizkessel 5 geführt werden. Bei der gezeigten Ausführungsform werden die Motorabgase über den Abgaseinleitungsanschluß 6 in einen Brennraum 8 eingeführt, der im wesentlichen das obere Drittel des Heizkessels 5 einnimmt. Am Heizkessel 5 ist ein Brenner 9 angeordnet, wobei die beim Betrieb des Heizkessels vom Brenner 9 abgegebene Heizflamme in den Brennraum 8 gerichtet ist.

Etwa im mittleren Drittel des Heizkessels 5 ist ein Primärwärmetauscher 10 angeordnet, der von einem Wärmeträgermedium durchströmt wird. Das im Primärwärmetauscher 10 erwärmte Medium wird an einen Vorlaufanschluß 11 eines zu versorgenden Heizkreislaufs abgegeben. In dem Heizkreislauf ist mindestens ein Wärmeverbraucher 12 angeordnet, der mit Wärmeenergie zu versorgen ist. Nach Durchlaufen des Wärmeverbrauchers 12 gelangt das Wärmeträgermedium mit verringerter Temperatur zu einem Rücklaufanschluß 13 am Heizkessel 5, über welchen das Warmeträgermedium in der gezeigten Ausführungsform wiederum dem Primärwärmetauscher 10 zugeführt wird.

Im unteren Drittel des Brennwertheizkessels 5 ist ein Sekundärwärmetauscher 14 angeordnet. Unter Abgabe ihrer Wärmeenergie an den Sekundärwärmetauscher 14 werden in diesem unteren Drittel des Brennwertheizkessels 5 sowohl die Abgase des Verbrennungsmotors als auch die durch den Brenner 9 emittierten Rauchgase unter ihren Taupunkt abgekühlt, um die in den Gasen gespeicherte latente Wärmeenergie zu nutzen.

Insbesondere bei der Verwendung eines Flüssigbrennstoffs, wie zum Beispiel Dieselöl, muß der Sekundärwärmetauscher 14 aus einem korrosionsbeständigem Material hergestellt sein, da bei der Kondensation des in den Abgasen enthaltenen Wassers ein säurehaltiges Kondensationsgemisch entsteht, welches korrosionsanfällige Wärmetauscher schnell zerstören wurde Demgegenüber ist der Primärwärmetauscher 13 aus Materialien herzustellen, die hinsichtlich der hohen Temperaturanforderungen in der Nähe der Heizflamme langzeitbeständig sind.

Bei der gezeigten Ausführungsform wird der Sekundärwärmetauscher 14 dazu verwendet die dem Brenner 9 zuzuführende Verbrennungsluft vorzuwärmen. Bei anderen Ausführungsformen kann die gewonnene Wärmeenergie aber auch unmittelbar in den Heizkreislauf eingespeist werden.

Unterhalb des Sekundärwärmetauschers 14 ist vorzugsweise ein Neutralisationsbereich 15 angeordnet, in welchem die belasteten Kondensationsrückstände neutralisiert und umweltverträglich aufbreitet werden.

Sofern von den an das erfindungsgemäße Blockheizkraftwerk angeschlossenen Verbrauchern in einem ersten Betriebsfall eine große Menge an elektrischer Energie und nur in geringem Umfang Wärmeenergie angefordert wird, wird nur der Verbrennungsmotor 1 in Betrieb gesetzt, um über den Generator 2 die benötigte Elektroenergie zur Verfügung zu stellen. Ein großer Anteil der vom Verbrennungsmotor 1 erzeugten Abwärme ist in den Motorabgasen enthalten, die über die Abgasleitung 7 dem Heizkessel 5 zugeführt werden. Über den Primärwärmetauscher 10 und gegebenenfalls über den Sekundärwärmetauscher 14 wird den Motorabgasen die Wärmeenergie entzogen, um dem Heizkreislauf, letztlich also dem Wärmeverbraucher 12, die benötigte Wärmeenergie zuzuführen.

Wie bei der in Fig. 1 dargestellten Ausführungsform gezeigt ist, besteht weiterhin die Möglichkeit einen externen Wärmetauscher 16 vorzusehen, der die sonstige Abwärme des Verbrennungsmotors 1 aufnimmt und in den Heizkreislauf einspeist. Es ist jedoch auch möglich die sonstige Abwärme des Verbrennungsmotors 1 zur Vorwärmung der dem Brenner 9 zugeführten Verbrennungsluft auszunutzen oder beispielsweise durch gebläseunterstützte Zuführung von erwärmter Luft in den Heizkessel 5 dirket in den Wärmekreislauf einzuspeisen.

In einem zweiten Betriebsfall fordern die angeschlossenen Verbraucher eine höhere Wärmemenge am Blockheizkraftwerk ab, als durch die Rückgewinnung der Abwärme des Verbrennungsmotors zur Verfügung gestellt werden kann. In diesem Fall wird der Brenner seine Arbeit aufnehmen und eine Heizflamme im Brennraum 8 erzeugen. Über die Heizflamme wird dem Primärwärmetauscher 10 unmittelbar eine große Wärmemenge zugeführt. Weiterhin erhält der Primärwärmetauscher 10 auch einen Wärmeenergieeintrag aus den Abgasen des Verbrennungsmotors 1. Bei geeigneter Einleitung der Abgase in den Brennraum 8 wird nicht nur das ungewollte Ersticken der Heizflamme vermieden sondern vorteilhafterweise eine Nachverbrennung der Motorabgase bewirkt, die hauptsächlich im Bereich des oberen Drittels des Heizkessel 5, also im Brennraum 8 stattfindet. In diesem Betriebszustand geben sowohl die Rauchgase, die vom Brenner 9 emittiert werden, als auch die nachverbrannten Motorabgase ihre latente Wärmeenergie an den Sekundärwärmetauscher 14 ab.

In einem dritten Betriebsfall fordern die an das Blockheizkraftwerk angeschlossenen Verbraucher keine Elektroenergie ab (oder nur so wenig elektrische Energie, so daß sich der Start des Stromerzeugungsaggregats nicht lohnt und dieser geringe Betrag an Elektroenergie beispielsweise aus dem öffentlichen Versorgungsnetzwerk oder einem angeschlossenen Elektroenergiespeicher entnommen werden kann), jedoch besteht ein Bedarf an Wärmeenergie. In diesem Fall wird lediglich der Brennwertheizkessel 5 in Betrieb genommen, indem der Brenner 9 seine Arbeit aufnimmt. In diesem Zustand arbeitet das Blockheizkraftwerk wie ein gewöhnlicher Brennwertheizkessel.

In allen Fällen werden die emittierten Abgase bzw. Rauchgase bei der dargestellten Ausführungsform im unteren Bereich des Heizkessels 5 an einen Abgasabzug 17 abgegeben. Aufgrund der sehr niedrigen Abgastemperaturen ist es zweckmäßig, wenn im Abgasabzug 17 ein Abgasgebläse 18 angeordnet ist.

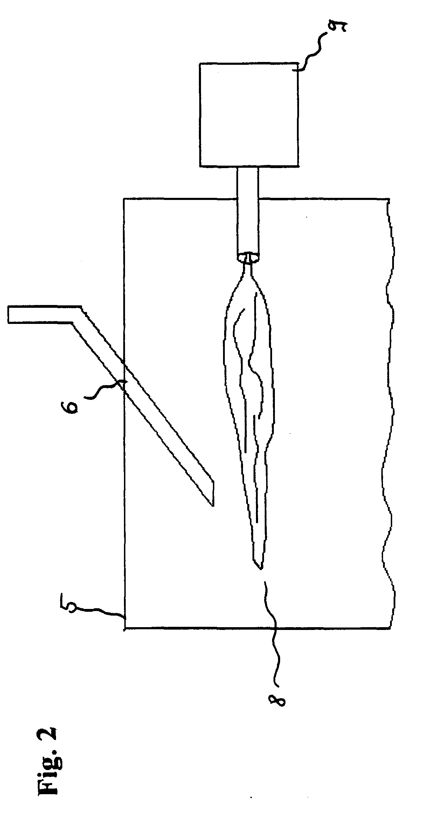

In Fig. 2 ist in einer Detaildarstellung eine bevorzugte Ausführungsform des Abgaseinleitungsanschlusses 6 gezeigt. Im Bereich des Brennraums 8 ist am Heizkessel 5 wiederum der Brenner 9 angeordnet. Bei dieser Ausführungsform wird vom Brenner 9 im wesentlichen in horizontaler Richtung die Heizflamme in den Brennraum 8 eingeleitet. Der Abgaseinführungsanschluß 6 ist am Heizkessel 5 wiederum im Bereich des Brennraums 8 angeordnet und zwar in der Weise, daß der Hauptstrom der Abgase in einem spitzen Winkel zur Längserstreckung der Heizflamme in den Brennraum 8 eingeleitet wird und die Heizflamme etwa an der Spritze des sichtbaren Flammenkegles kreuzt. Bei der konstruktiven Gestaltung ist besonderer Wert darauf zu legen, daß die Abgase des Verbrennungsmotors die Heizflamme nicht in ihrem Kern treffen, da ansonsten die Gefahr des Erstickens der Heizflamme bestehen würde. Dies kann auch dadurch erreicht werden, daß die Abgase im wesentlichen parallel zur Heizflamme in den Brennraum eingeleitet werden.

Die in Fig. 2 dargestellte Ausführungsform ermöglicht eine besonders effektive Nachverbrennung der Abgase des Verbrennungsmotors, welche hauptsächlich im oberen Drittel des Heizkessels vollzogen wird. Andere konstruktive Ausgestaltungen sind jedoch denkbar.

Es zeigt sich, daß mit dem erfindungsgemäßen Blockheizkraftwerk erstmals eine Kombination eines Brennwertheizkessels mit einem Verbrennungsmotor in der Weise erfolgt, daß die Abgase des Verbrennungsmotors unmittelbar in den Brennraum des Brennwertheizkessels eingeführt werden und so die in den Abgasen enthaltene Wärmeenergie über die Wärmetauscher des Brennwertheizkessels zurückgewonnen werden kann.

## Patentansprüche

1. Blockheizkraftwerk mit
• einem Stromerzeugungsaggregat, welches einen Verbrennungsmotor (1) und einen von diesem angetrieben Generator (2) umfaßt; und
• einem Heizkessel (5), der
- einen Brenner (9), dessen Heizflamme beim Betrieb in einen Brennraum (8) gerichtet ist, und
- einen Wärmetauscher (10, 14), der von einem Wärmeträgermedium durchströmt wird, besitzt;
wobei
• die vom Verbrennungsmotor (1) emittierten Abgase unmittelbar in den Brennraum (8) des Heizkessels (5) in einem spitzen Winkel zur Längserstreckung der Heizflamme des Brenners eingeleitet werden, so daß der Hauptabgasstrom die Heizflamme des Brenners (9) etwa an deren Spitze kreuzt; und
• als Heizkessel ein Brennwertheizkessel (5) verwendet wird, in welchem die vom Verbrennungsmotor (1) emittierten Abgase und/oder die vom Brenner (9) emittierten Rauchgase vor Abgabe an die Umwelt über den Wärmetauscher (10, 14) bis unter ihren Taupunkt abkühlbar sind.

2. Blockheizkraftwerk nach Anspruch 1, dadurch gekennzeichnet, daß
• der Brennraum (8) etwa das obere Drittel des Heizkessels (5) einnimmt;
• die Abgase des Verbrennungsmotors (1) in dieses obere Drittel eingeleitet werden;
• der Wärmetauscher aus einem Primärwärmetauscher (10), welcher etwa im mittleren Drittel des Heizkessels angeordnet ist, und einem Sekundärwärmetauscher (14), welcher etwa im unteren Drittel des Heizkessels angeordnet ist, besteht; und
• die Abführung der Abgase und/oder Rauchgase im unteren Bereich (16) des Heizkessels unter Verwendung eines Abgasgebläses (17) erfolgt.

3. Blockheizkraftwerk nach Anspruch 1 oder 2, dadurch gekennzeichnet, daß die Abgase des Verbrennungsmotors (1) beim Betrieb des Brenners (9) im wesentlichen im Brennraum (8) des Heizkessels (5) einer Nachverbrennung unterzogen werden.

4. Blockheizkraftwerk nach einem der Ansprüche 1 bis 3, dadurch gekennzeichnet, daß der Brenner (9) mit einem flüssigen Brennstoff betrieben wird.

5. Blockheizkraftwerk nach einem der Ansprüche 1 bis 4, dadurch gekennzeichnet, daß der Verbrennungsmotor (1) mit einem flüssigen Brennstoff betrieben wird.

6. Blockheizkraftwerk nach einem der Ansprüche 1 bis 5, dadurch gekennzeichnet, daß die vom Verbrennungsmotor (1) an die Umgebung abgegebene Wärme zur Erwärmung der dem Brenner (9) zugeführten Verbrennungsluft genutzt wird.

7. Blockheizkraftwerk nach Anspruch 6, dadurch gekennzeichnet, daß der Verbrennungsmotor (1) in einem wärmeisolierenden Gehäuse angeordnet ist, durch welches die dem Brenner (9) zugeführte Verbrennungsluft geführt wird.

8. Blockheizkraftwerk nach Anspruch 6, dadurch gekennzeichnet, daß der Verbrennungsmotor (1) in einem wärmeisolierenden Gehäuse angeordnet ist, durch welches Luft geführt wird, die anschließend in den Heizkessel (5) eingeleitet wird.
